# EUROPEAN PATENT APPLICATION

(11) **EP 1 652 423 A1**
(43) Date of publication of application: **03.05.2006**
(21) Application number: 04748963.8
(22) Date of filing: 13.07.2004
(51) Int. Cl.: A01G 15/00

(54) **METHOD FOR BREAKING ANTICYCLONIC CIRCULATION AND DEVICE FOR CARRYING OUT SAID METHOD**

(30) Priority: 16.07.2003 RU 2003121612
(71) Applicant: Protopopov, Vadim Anatolevich, Moscow, 127224 (RU); Bologurov, Sergey Vladimirovich, Kalushskaya obl., 249710 (RU); Rodkin, Roman Eduardovich, Moscow, 123001 (RU); Egorov, Mikhail Andreevich, Moscow, 115563 (RU); Verzhbitsky, Yaroslav Vladimirovich, Moskovskaya obl., 14722 (RU); Goncharov, Igor Valerievich, Moscow 115682 (RU); Bodrov, Dmitry Nikolaevich, St. Petersburg 194354 (RU)
(72) Inventor: PROTOPOPOV, Vadim Anatolevich, Moscow, 127224 (RU); BOLOGUROV, S.V., d. Mishnevo, 23, Kaluzhskaya obl., 249710 (RU)
(74) Representative: Schneider, Henry
(86) International application number: PCT/RU2004/000269
(87) International publication number: WO 2005/006844

(57) **Abstract**

The invention relates to methods for overcoming an anticyclonic situation and to devices for carrying out said methods. The inventive method for breaking an anticyclonic circulation consists in forming a low-pressure area in the top part of an anticyclone area by means of an upward ionised air stream until a cyclonic whirl is formed. In order to carry out said method, a device comprising at least one ion generator, which is provided with a corona electrode and an ion extractor, is used. Said corona electrode is arranged around the ion extractor along an oblique, which tapers in the direction of the base surface thereof. Said surface can be embodied in the form of the lateral surface of a cone or a pyramid or in the form of a paraboloid or hyperboloid surface or the lateral and small base surface of said and similar truncated geometric bodies. The flow concentrator of the thus obtained ions is also provided.

## Description

### Technical field

This invention relates to applied meteorology and can be used in the agricultural sector and for the improvement of the environmental conditions in case of atmospheric stagnations, which may occur as a result of an anticyclonic situation continuing over a long period of time.

### Background art

Droughts are known to be a very frequent natural phenomenon that systematically does enormous damage to the cultivated crops. Moreover, droughts favor the initiation of fires that eliminate large areas of forestland every year. In spite of all efforts devoted to this problem, the techniques of fighting this dangerous phenomenon remain inefficient.

The usual meteorological prerequisite for droughts is a persistent anticyclonic situation. The most efficient method for overcoming anticyclonic situations is considered to be the generation of artificial fleecy clouds in the areas of anticyclonic predominance, which reduce the solar radiation transparency of the atmosphere, thus reducing the overall radiation balance of the earth surface, and thereby reducing the downward air streams, which impede the process of natural cloud formation (L.G Kachurin, Physical Principles of Atmospheric Process Correction, Leningrad, Gidrometeoizdat, 1990, p. 404-407). This intervention is aimed at reducing the temperature of the earth surface layer and thus shortening the anticyclone lifetime. The generation of the fleecy clouds is assumingly performed by means of the emission of water vapor, supersaturated with moisture relative to the atmosphere. It has been suggested to use additionally humidified airplane reaction jets or special airplane steam generators for that purpose. For some atmospheric layers application of either crystallization nuclei or surfactants is recommended.

The disadvantage of said methods of overcoming an anticyclonic situation (and thus fighting drought) is in that they require the application of aircraft fleet and other expensive facilities, as well as the reactants. Naturally, these methods cannot be widely adopted. Another significant disadvantage of said method for fleecy cloud generation is in that said method can prove efficient only after the anticyclone has already passed through its peak phase. However, this method is hypothetical and has never been tested in practice.

The majority of other known engineering solutions for overcoming an anticyclonic situation are based on the generation of cumulonimbus clouds over a certain area and subsequent artificial initiation of precipitation (rain). A known group of cloud generation methods is based on the process of heating an area of the underlying earth surface relative to the surrounding area, thus initiating convective air motions followed by the subsequent generation of clouds, and possibly by precipitation, providing that the clouds possess a sufficient amount of moisture. In particular, the method for arid zone precipitation initiation according to the RU 2071243 Russian Patent uses a blackened coverage applied onto the underlying earth surface and additionally heated by the solar radiation directed to that area by means of a set of large mirrors. The overheating of the underlying earth surface should initiate upward hot air streams, which undergo adiabatic volume expansion and cooling, thus causing water vapor condensation in the form of cumulonimbus clouds, followed by the precipitation over the required area. Said cloud generation methods require expensive equipment and/or large quantities of paints.

Another extensive group of cumulonimbus cloud generation and precipitation initiation methods is based on the process of electrically influencing the atmosphere. Said methods are most actively developed at present. The convection initiation method used therein is based on the atmospheric air ionization, which generates upward currents thus forming a volume electric charge in the atmospheric, which favors moisture condensation and subsequent precipitation (see, e.g., the RU 2042318, 2098942 and 2161881 Patents).

Obviously, the closest counterpart of the inventive method for breaking anticyclonic circulation in the atmosphere is the method for cloud field generation and precipitation initiation based on the formation of a convection cell in the atmosphere in accordance with the RU 2090057 Patent. According to said method, an upward air stream is generated by means of a stream of light unipolar hydrated ions. Compared to other similar engineering solutions, said method provides the generation of a relatively stable air stream capable of reaching high altitudes in the atmosphere even in the presence of strong horizontal wind (5 m/s or greater) and/or trapping atmospheric layers. The stability of the air stream is achieved by means of the selective ionization of the molecules of various atmospheric air gases, mainly its oxygen components, i.e., the atomic oxygen, as well as the oxygen and ozone molecules. The initiation of precipitation (and subsequent reduction of the maximal daytime earth surface temperature) by means of said method can sometimes have good results in droughty regions, but only if favorable atmospheric conditions exist in the area. Moreover, the desired effect is not guaranteed, because the upward air streams used for the formation of the convection cell in the atmosphere produce relatively closely spaced downward air streams. This convection pattern reduces the probability of large cloud fields' formation.

Another disadvantage of known methods for overcoming an anticyclonic situation described above consists in that said methods can have only local influence on the atmosphere, while the local correction of atmospheric conditions cannot lead to any radical changes in the meteorological conditions on a macroscopic scale. Therefore, the results of said methods are not reliable. One can additionally point out that known engineering solutions use the upward air streams for influencing atmosphere for quite different, often contradictory purposes, both for cloud generation in order to initiate precipitation and for the dispersion of clouds and/or mist, which is the opposite. These contradictory applications clearly show that the application of upward air streams for influencing atmosphere has a limited, local pattern. The local pattern of this influence is due to the fact that the generated upward air stream has insufficient power and stability, and that the influence is interrupted during the passage of a clear cloudless air region.

In order to carry out said methods for influencing atmosphere by means of ionized upward air streams for the purposes of cloud generation and precipitation initiation, atmospheric air ionizing devices are used. At present various implementations of said devices, based on ion generators, are known. An ion generator is usually embodied as an electrode or a set of electrodes, to which high voltage is supplied in order to produce the corona effect on the current conductors with subsequent electron emission. The emitted electrons ionize the molecules of the air gases, which under the influence of the repulsion from the negative field of the Earth form an upward ion flow rising into the atmosphere. However, the air motions usually cause the ionized air stream to disperse even at small heights and to form a volume electric charge.

According to the upward air stream generation device (RU 2090057 Patent) closest to the present invention, there is provided an ion generator comprising an air ionization device embodied in the form of an electron emitter used for the ionization of the molecules of gases having electron affinity energy of 0.4-2.2 eV. The electron emitter is an electric current conductor connected to the negative pole of a voltage source. A grounded conductor is connected in parallel with said conductor. Both conductors are arranged spatially as a set of working sections. When an electric potential sufficient for the corona effect is supplied to the electrodes, the electron emission from the corona electrode is initiated. The electrical parameters of the device are chosen so as to limit the ionization energy to the value of the energy sufficient for the ionization of the molecules of oxygen or other oxygen bound air components (O⁻ and O₂⁻) that are capable of forming the so-called light ions having high mobility in the electrical field. When said ions combine with the molecules of the atmospheric water vapor, heating energy is released causing the air to overheat and thus initiating air rise. Said rising air forms a low-pressure area, which rapidly moves upward, thus maintaining a stable upward air stream. The selective influence of said ion generator, which is based on the fact that the ionization of oxygen molecules is the most energetically efficient one, allows generating a stable upward air stream capable of overcoming significant dispersing forces of horizontal winds (5 m/s or greater). For the purpose of increasing the stability of an upward air stream said ion generator is provided with an ion flow humidifier and a device for accelerating the outflow of the electrons and ions, embodied as an extractor. Said extractor can be embodied, for example, in the form of an electrostatic device, i.e., an electric conductor.

Although the structure of said generator allows generating a stable upward air stream, it has a disadvantage consisting in that the corona conductor of the electron emitter has an arbitrary spatial distribution, i.e., some sections can be positioned horizontally, while others obliquely or vertically. This disadvantage is due to the fact that in case of vertical positioning of the corona conductor sections, the lower located electron emitter conductor sections actually impede the electron emission from the sections positioned higher, thus significantly reducing the total power of the stream of the obtained ions. The ion flow of maximal intensity can be obtained with the corona conductors positioned horizontally, but the thus obtained ion flow is not stable enough, because the ion extractor cannot function efficiently under such conditions. In addition, the construction is rather space-consuming. The positioning of the corona conductor along an arbitrary oblique makes up for the mentioned disadvantages of vertical and horizontal positioning to a certain extent, but the positioning of the corona conductor and the ion extractor is not coordinated in this case and, therefore, the improvement is insignificant.

The advantages of said ion generator do not go beyond its basic functions, i.e., the formation of a convection cell over a certain object on the earth surface area by generating a series of upward and downward air streams. However, as noted above, downward air streams impede the process of natural cloud formation. Therefore, for example, instead of expected precipitation one can achieve the opposite results for the area, above which the upward air stream was generated. The formation of convective cells is basically another method for locally influencing the lower atmospheric layers.

### Summary of the invention

In the known methods precipitation is initiated mainly in the presence of clouds above the required area or if clouds with a sufficient moisture level can be produced artificially. However, in some areas, clouds that could serve as a source of sufficient precipitation may fail to appear for many weeks. Even if one succeeds to initiate a short rain in such areas, it would be impossible to repeat the procedure for a long time thereafter due to the absence of sufficient amount of moisture in the atmosphere.

Methods based on the overcoming of an anticyclonic situation can provide a more reliable approach to the fighting of anticyclones, for the reason that large-scale droughts are usually initiated exactly by persistent and often cloudless anticyclones.

It is an object of this invention to provide a solution for fighting an anticyclone by means of overcoming a regional anticyclonic situation and for designing a device for providing an upward ionized air stream capable of breaking such meteorological situation.

The engineering result of the application of the inventive method for breaking an anticyclonic circulation consists in that the weather conditions change, in particular, clouds appear and precipitation is initiated in the area of a persistent anticyclonic situation.

The engineering result of the application of the inventive device consists in that a low-pressure area is formed in the top part of the anticyclone area, said low-pressure area being sufficient for the formation of a cyclonic whirl in the top part of the anticyclone area.

According to the inventive method for breaking an anticyclonic circulation, said engineering result is achieved by influencing the atmosphere in the anticyclone area with a stable upward ionized air stream, wherein a low-pressure area is formed in the top part of the anticyclone area, producing an upper-level cyclone. In the preferred embodiments of the present method the ionized air stream is directed either to the area with highest level of atmospheric moisture or to a relatively low-pressure area in the anticyclone area, wherein a low-pressure area about 100-150 kilometers in diameter is formed in the top part of the anticyclone area, and wherein the parameters of the ionized air stream being generated can be adjusted according to the stage of the low-pressure area formation in the anticyclone area.

According to the inventive device for providing a stable upward ionized air stream, said engineering result is achieved provided that said device comprises at least one ion generator, which is provided with a corona electrode and an ion extractor, wherein said corona electrode is arranged around the ion extractor along an oblique, which tapers in the direction of the base surface thereof.

In the preferred embodiment of the present invention, said ion generator comprises a corona electrode arranged along the lateral surface of an apex-down cone, pyramid or similar geometric body, or along the surface of a paraboloid, hyperboloid or similar geometric body, or along the lateral and small base surface of said and similar truncated geometric bodies positioned apex down.

In the preferred embodiment said device is provided with a flow concentrator of the thus obtained ions embodied, for example, as an electromagnetic clutch positioned above the ion generator.

### Brief description of the drawings

The present invention is illustrated, by way of example, with reference to the accompanying drawings in which:

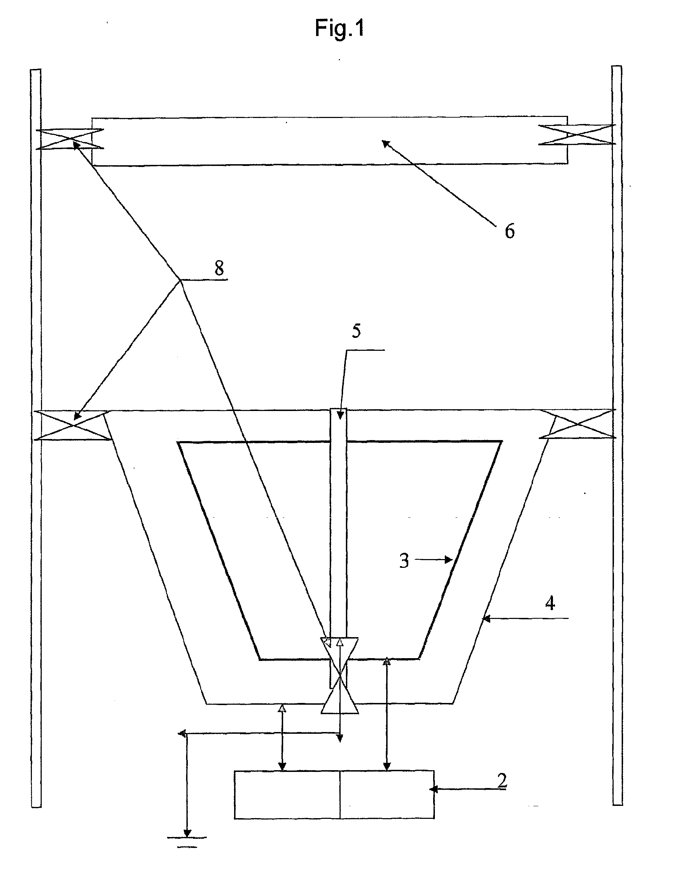

Figure 1 is a schematic cross-sectional view of the ion generator;

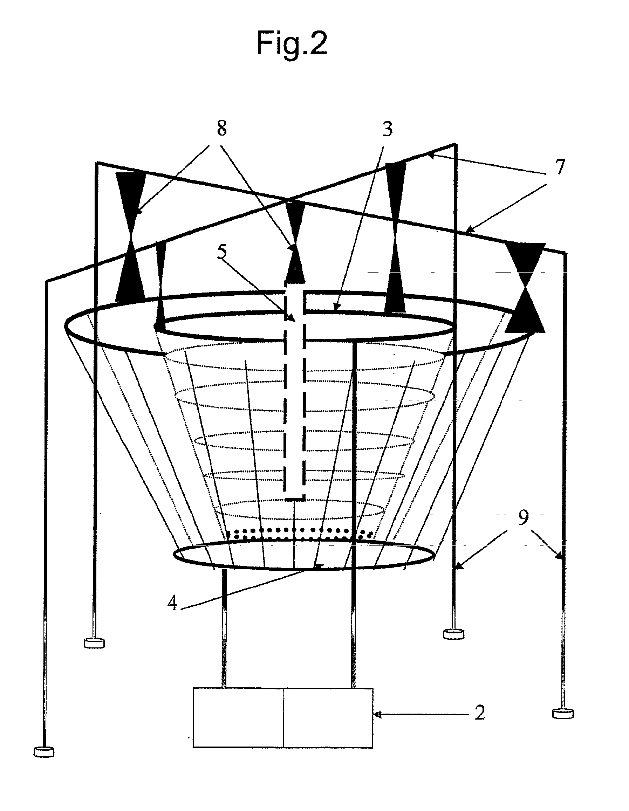

Figure 2 is a general view of the ion generator with the corona electrode arranged along the lateral surface of a truncated cone positioned apex-down;
Figure 3 is a scheme of the formation of an ionized air stream causing a formation of a cyclonic whirl;
Figure 4 is a scheme of an experiment of an upper-level cyclone formation.

### Preferred embodiment

The inventive device for providing a stable upward ionized air stream comprises one or multiple ion generators 1. Each ion generator 1 comprises a direct high-voltage source 2, wherein the negative pole of said voltage source is connected to the corona electrode 3 used as an electron emitter, and the positive pole of said voltage source is connected to the grounded conductor 4 and to the extractor 5, which is an electrode that accelerates the outflow of the electrons emitted by the corona electrode 3 and the formation of an upward ion flow rising into the atmosphere. The corona electrode 3 is a small-section electrical conductor arranged along the lateral surface of an apex-down cone, pyramid or similar geometric body, or along the surface of a paraboloid or a hyperboloid, or along the lateral and small base surface of a truncated cone, pyramid, paraboloid or hyperboloid positioned apex down or similar geometric bodies positioned apex down. The electrical conductor of the corona electrode 3 is made of a material with high electron emission capacity.

The geometric body, along the surface of which the corona electrode is arranged, generally is not important. It is important, however, that said geometric body should be positioned apex down, i.e., the surface of said body should substantially taper in the direction of the earth surface like a funnel or alternatively form an open umbrella turned upside down. The cross-section of said geometric body may be a polygon, a circle, an ellipse or some other geometrical figure. The extractor 5 is a conductor arranged substantially along the axis line of the geometrical body along the surface of which the corona electrode is arranged, i.e., said extractor 5 is the "umbrella handle' in relation to the figure formed by the corona electrode 3. The electron emitter is thus positioned substantially along an oblique which tapers in the direction of the base surface of the extractor.

In the preferred embodiments of the invention the surface wherealong the corona electrode is arranged is the lateral and small base surface of a truncated cone, pyramid, paraboloid or hyperboloid positioned apex down or similar truncated geometric bodies positioned apex down.

The grounded conductor 4 is substantially a conductor arranged along a surface parallel to the surface wherealong the corona electrode 3 is arranged.

An electromagnetic clutch device 6 positioned above the ion generator can be used for concentrating the flow of negative ions emitted by said ion generator. The entire structure is mounted on posts 9 by means of the attachment members 7 and the insulators 8.

When a sufficient electric potential is supplied to the electrodes 3 and 4, the electrode 3 begins to display corona effect thus emitting electrons. The grounded extractor 5 provides a stable outflow of the electrons emitted by the emitter 3, thus maintaining the maximum possible level of electron emission from the emitter. The majority of the electrons emitted by the emitter 3 and repelled by the negative background potential of the earth surface tend to rise upwards into the atmosphere forming a stable flow. When said electrons combine with the air molecules, negatively charged ions are formed, which immediately begin to attract groups of molecules of the atmospheric water vapor. It is well known in the art that the presence of said water molecules accelerates the flow of the ionized molecular complexes formed in the atmosphere.

During the formation of the molecular complexes heating energy is released, causing the adiabatic volume expansion of the air surrounding said complexes, whereupon the air rises upwards while cooling down, and the water vapor contained in the air condenses under appropriate conditions. The low-pressure area receives new portions of the surrounding air, which are also ionized by the maintained ion flow and heated during the formation of new molecular complexes, and thereupon rise upwards. Thus, a stable upward ionized air stream (or "current") is formed in the atmosphere. Since the direction of the ion flow is defined by the charge of the earth surface, and direction of the air stream is defined by the atmospheric pressure gradient, the overall direction of said air stream will be substantially vertical under favorable conditions (e.g., in the absence of strong horizontal wind, this being typical for anticyclone areas). The dispersion of said air stream in the bottom layers of the troposphere will be insignificant, although it will gradually increase towards the upper layers of the troposphere.

The high stability of the upward air stream is the result of the distinctive features of the ion generator design. The arrangement of the corona conductor of the emitter 3 around the ion extractor 5 along an oblique, which tapers in the direction of the base surface thereof, allows coordinating their operation in an optimal way in order to significantly increase the power of the ion flow and the stability of the generated upward air stream. Under such conditions the ion extractor 5, which is positioned substantially vertically, is in fact arranged along the axis line of the surface wherealong the electron emitter 3 is arranged, and is spatially positioned at varying distances from the corona electrode. Such relative positioning of the electrodes 3, 4 and 5 first, eliminates the mutual impeding influence of the sections of the emitter located at different heights and second, enables to utilize the emitter surface in an optimal way, thus providing maximal outflow of the electrons from the corona electrode and resulting in a specific synergetic phenomenon, which consists in a drastic increase in the power of the emitted ion flow and a higher stability of the upward ionized air stream being generated.

Furthermore, the inventive design of the ion generator is less space-consuming and more practical in use.

The efficiency of the ion generator increases if the surface wherealong the electron emitter 3 is arranged is the lateral surface of a truncated cone, paraboloid, hyperboloid or pyramid positioned apex down in the direction of the base of the extractor 5. This eliminates the ion generator interference that could otherwise occur in the area where the emitter 3 and the extractor 5 are brought closer to each other. The electromagnetic clutch positioned above the ion generator accelerates the concentration of the generated ion flow.

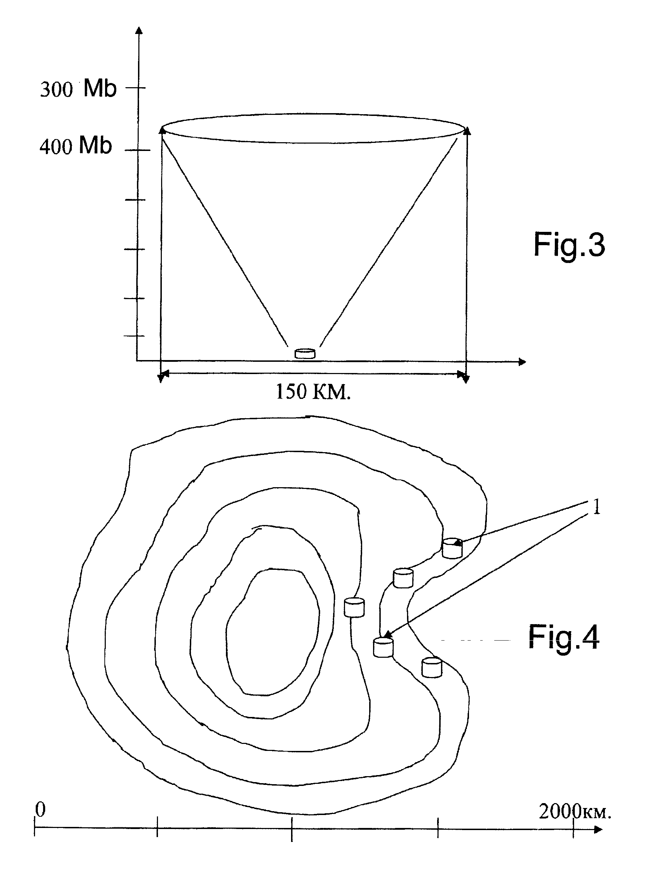

A device comprising even a single ion generator as described above provides an upward ionized air stream capable of reaching the top part of the anticyclone area. The upward ionized air stream is gradually dispersed in the low-pressure atmospheric layers (i.e., at greater altitudes). As the stream rises upward, it favors to an even greater extent the air pressure decrease in the space occupied by said stream, thus forming a substantially conical low-pressure area the diameter of which substantially increases upwards (referring to figure 3). According to the experimental data, the ionized air stream can reach an altitude that corresponds to atmospheric pressures of 300-400 millibars. Uneven air density distribution and the disturbances produced in the low-pressure area disrupt the internal stability of the atmosphere. At these altitudes, which usually correspond to the upper zone of the anticyclone area, air masses with a relatively low internal stability are subject to the Coriolis forces influence, and a cyclonic whirl is formed as a result. The cyclonic whirl formation disrupts the circulation of the anticyclone air masses in the top part of said anticyclone. Said cyclonic whirl gradually expands and occupies still lower atmospheric layers in the anticyclone area, thus breaking the anticyclonic circulation. The cyclone causes the accumulation of clouds followed by subsequent precipitation.

In the preferred embodiment of the inventive method for overcoming anticyclonic circulation an upper-level cyclone is formed by generating an upward air stream of a power sufficient for the formation at specified altitudes of a low-pressure area about 100-150 kilometers in diameter.

In order to accelerate the breaking of an anticyclonic circulation or to increase the reliability of the inventive method, it is advisable to make use of favorable atmospheric conditions, which can be determined by means of a complex of meteorological measurements. For example, the analysis of isobaric maps allows detecting natural low-pressure area ("valleys") in order to direct the ionized air streams into these areas. The efficiency of the method for the projection of a low-pressure surface to the earth surface can be increased by installing multiple ion generators 1. The number of the ion generators, the distance between them and the operation mode of each generator depend on multiple factors, in particular, on the phase of the anticyclone state, on the anticyclone isobaric structure and the local orographic pattern, and therefore the parameters mentioned above should be selected individually on a case-by-case basis. One embodiment of the ion generator 1 layout for certain specific conditions is shown in figure 4. The operation of individual ion generators 1 can be coordinated by providing interaction between generators through a common control unit (not shown).

Another way of increasing the efficiency of the method for breaking anticyclonic circulation consists in selecting an area with a relatively higher level of atmospheric moisture in the anticyclone area, where the probability of the formation of air-mass cumulus clouds is higher. For this purpose an appropriate area or areas are preliminarily detected in the anticyclone structure by means of corresponding measurements, whereupon the ionized air streams, generated by the inventive device comprising one or multiple ion generators, are directed to said areas.

## Claims

1. A method for breaking anticyclonic circulation, comprising influencing the atmosphere in the anticyclone area by means of a stable upward ionized air stream, wherein said ionized air stream forms a low-pressure area in the top part of an anticyclone area, producing an upper-level cyclone.

2. A method according to claim 1 wherein said ionized air stream is directed to the area with highest level of atmospheric moisture in the anticyclone area.

3. A method according to claim 1 wherein said ionized air stream is directed to a relatively low-pressure area in the anticyclone area.

4. A method according to any one of claims 1 to 3 wherein the diameter of said low-pressure area is substantially about 100-150 kilometers.

5. A method according to either claim 3 or claim 4 wherein the parameters of said ionized air stream are adjustable.

6. A method according to claim 5 wherein said ionized air stream parameters are adjusted according to the stage of the low-pressure area formation in the anticyclone area.

7. A device for providing a stable upward ionized air stream, comprising at least one ion generator, which is provided with a corona electrode and an ion extractor, wherein said corona electrode is arranged around the ion extractor along an oblique, which tapers in the direction of the base surface thereof.

8. A device according to claim 7 wherein the corona electrode is arranged along the lateral surface of a cone, pyramid or similar geometric body, or along the surface of a paraboloid or a hyperboloid.

9. A device according to claim 7 wherein the corona electrode is arranged along the lateral and small base surface of a truncated cone, pyramid, paraboloid or hyperboloid or similar geometric bodies.

10. A device according any one of claims 7 to 9 wherein said device is provided with a flow concentrator of the thus obtained ions.

11. A device according to claim 10 wherein said flow concentrator is embodied as an electromagnetic clutch.
